# EUROPEAN PATENT APPLICATION

(11) **EP 3 051 861 A1**
(43) Date of publication of application: **03.08.2016**
(21) Application number: 15305101.6
(22) Date of filing: 29.01.2015
(51) Int. Cl.: H04W 24/02

(54) **PROVIDING INFORMATION RELATED TO A QUALITY OF ONE OR MORE WIRELESS FRONTHAUL LINKS BETWEEN A BASE BAND UNIT AND ONE OR MORE RADIO UNITS OF A BASE STATION TRANSCEIVER**

(71) Applicant: ALCATEL LUCENT, 92100 Boulogne-Billancourt (FR)
(72) Inventor: WICH, Andreas, 70435 Stuttgart (DE); WIEGNER, Dirk, 70435 Stuttgart (DE)
(74) Representative: 2SPL Patentanwälte PartG mbB

(57) **Abstract**

Embodiments relate to apparatuses, methods and computer programs suitable for providing information related to a quality of one or more wireless fronthaul links between the base band unit (200) and one or more radio units (100) of a base station transceiver (250). An apparatus (10) suitable for a base band unit (200) for at least one wireless access link (75; 75a) between a base station transceiver (250) and at least one mobile transceiver (50; 50a) comprises at least one input (12) to obtain information related to one or more wireless access link quality indicators for the at least one wireless access link (75; 75a) of the least one mobile transceiver (50) and at least one output (14) to provide the information related to the quality of the one or more wireless fronthaul links. The apparatus further comprises a control module (16) to determine the information related to the quality of the one or more wireless fronthaul links, based on the information related to the one or more wireless access link quality indicators.

## Description

### Technical Field

Embodiments relate to apparatuses, methods and computer programs suitable for providing information related to a quality of one or more wireless fronthaul links between a base band unit and one or more radio units of a base station transceiver, particularly, but not exclusively, based on information related to one or more wireless access link quality indicators for at least one mobile transceiver.

### Background

This section introduces aspects that may be helpful in facilitating a better understanding of the invention(s). Accordingly, the statements of this section are to be read in this light and are not to be understood as admissions about what is in the prior art or what is not in the prior art.

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. The demands are growing for both directions of transmission, in the DownLink (DL) for transmission from the network infrastructure to a mobile transceiver, as well as in the UpLink (UL) for transmission from a mobile transceiver to the network infrastructure.

Current mobile communication systems increasingly rely on small cell base stations. Small cell base stations can be used to cover areas where the macro cell base stations do not provide sufficient coverage and capacity and to improve network efficiency. Small cells may appear to be an efficient approach to increase the capacity and improve network efficiency. It is recognized, however, that the potential attractiveness of small cells might only be realized if installation costs can be controlled. Two requirements for a small cell installation might be electrical power and backhaul, which when provided by wired connections may often be costly. A wired connection for electrical power may be eliminated by deriving power from a small wind turbine or solar panel and charging storage batteries, and by decreasing internal power consumption. The second small cell wired connection may be eliminated by using wireless backhaul.

To decrease internal power consumption a repeater-type small cell might be used, that on downlink receives a complex-valued analog baseband signal on a carrier frequency from a backhaul link and re-transmits the baseband signal at an access carrier frequency that accommodates one or more small cell users, and on the uplink receives from one or more small cell users their combined transmitted signals on an access link and re-transmits their combined baseband signals on the backhaul uplink. The repeater small cell might mainly comprise pre-amplifiers, frequency converters, filters and power amplifiers so it might be designed for low-power consumption.

### Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, methods and computer programs suitable for providing information related to a quality of one or more wireless fronthaul links between a base band unit and one or more radio units of a base station transceiver. While the quality of the wireless access link, between the radio units and mobile transceivers, might often be continuously measured and optimized, the quality of the wireless fronthaul link might be seen as near-constant and neglected. As a complete re-initialization may produce unwanted downtime, the downtime may be decreased if information related to a quality of the wireless fronthaul link is available.

Embodiments provide an apparatus suitable for a base band unit for at least one wireless access link between a base station transceiver and at least one mobile transceiver. The apparatus is suitable for providing information related to a quality of one or more wireless fronthaul links between the base band unit and one or more radio units comprised in the base station transceiver.

The base station transceiver comprises the base band unit, one or more radio units and one or more wireless fronthaul links between the base band unit and the one or more radio units. For the wireless fronthaul link, the base band unit and the one or more radio units may comprise one or more transceiver modules. The base band unit is configured to provide the base band for the at least one wireless access link between the base station transceiver and the at least one mobile transceiver.

The apparatus comprises at least one input to obtain information related to one or more wireless access link quality indicators for at least one mobile transceiver and at least one output to provide the information related to the quality of the one or more wireless fronthaul links. The apparatus further comprises a control module to determine the information related to the quality of the one or more wireless fronthaul links, based on the information related to the one or more wireless access link quality indicators. Such information might be used to determine a point of time or timeframe for adjustments, to decrease the overall downtime, and might trigger an adjustment, to increase the performance in case the quality of the wireless fronthaul link has deteriorated.

In various embodiments, the control module may be further configured to adjust transmission properties for the one or more wireless fronthaul links. By adjusting the transmission properties, the quality of the wireless fronthaul link may be increased.

In at least some embodiments, the information related to the one or more wireless access link quality indicators may comprise information related to at least one element of the group of a Channel Quality Indicator (CQI), a Pre-coding Matrix Indicator (PMI), a Channel State Information (CSI), a Channel State Information at the Transmitter (CSIT), a correlated increase in interference for two or more of the at least one mobile transceiver, a correlated decrease of receiver power for two or more of the at least one mobile transceiver, a Received Signal Strength Indication (RSSI), a Received Signal Power Indication (RSPI), or a mismatch between an expected reception power and an actual reception power on a link. Using quality indicators available for the mobile transceivers may enable an analysis without modification to the mobile transceivers and/or the radio units.

In at least some embodiments, the information related to the quality of the one or more wireless fronthaul links may comprise information related to a degradation of the quality of the one or more wireless fronthaul links between the base band unit and at least one of the one or more radio units. Such information might be used to determine a point of time or timeframe for adjustments, to decrease the overall downtime, and might trigger a adjustment, to increase the performance in case the quality of the wireless fronthaul link has deteriorated.

In at least some embodiments, the control module may be configured to obtain the information related to the one or more wireless access link quality indicators from the one or more radio units via the at least one input. The one or more radio units might collect the information related to the one or more wireless access link quality indicators to provide a comprehensive set of information related to quality indicators, which might be used to evaluate the quality of the wireless fronthaul link of the radio unit collecting the information.

In at least some embodiments, the control module may be configured to obtain the information related to the one or more wireless access link quality indicators from the at least one mobile transceiver, via the one or more radio units and the at least one input. Obtaining the information related to the one or more wireless access link quality indicators from the mobile transceivers may enable an analysis without modification to the one or more radio units.

In at least some embodiments, the information related to the quality of the one or more wireless fronthaul links may be based on information related to the one or more wireless access link quality indicators from at least two mobile transceivers. Using information from at least two mobile transceivers may decrease an influence of factors predominantly deteriorating the access link and less the wireless fronthaul link.

In various embodiments, the at least two mobile transceivers may maintain at least two different wireless access links to at least two different radio units. The information related to the one or more wireless access link quality indicators from the at least two mobile transceivers might comprise information related to indications for a correlated increase of interference, which may indicate problems with the directionality of a beam in beamforming.

In at least some embodiments, the information related to one of the one or more wireless fronthaul links between the base band unit and one of one or more the radio units may be based on information related to at least two wireless access link quality indicators provided by at least two mobile transceivers associated to the one radio unit. Using information from at least two mobile transceivers of one radio unit may decrease an influence of factors predominantly deteriorating the wireless access link and less the wireless fronthaul link.

In at least some embodiments, the control module may be configured to determine the information related to the quality of the one of the one or more wireless fronthaul links based on a correlation of the information related to the one or more wireless access link quality indicators provided by at least two mobile transceivers associated with one of the one or more radio units, a correlation of a change in the information related to the one or more wireless access link quality indicators provided by the at least two mobile transceivers associated with the one of the one or more radio units, or a correlation of information related to compositions of multiple of the one or more wireless access link quality indicators provided by the at least two mobile transceivers associated with the one of the one or more radio units. Using information from a plurality of mobile transceivers may decrease an influence of factors predominantly deteriorating the wireless access link and less the wireless fronthaul link.

In various embodiments, the at least one input may be further configured to obtain information related to a movement of at least one mobile transceiver. The control module may be further configured to base the information related to the quality of the one or more wireless fronthaul links also on the information related to the movement of the at least one mobile transceiver. By using information related to the movement, an influence of factors predominantly deteriorating the wireless access link and less the wireless fronthaul link may be decreased.

In at least some embodiments, the control module may be further configured to provide information related to a provision of an evaluation signal, via the at least one output, to the at least one mobile transceiver. The at least one input may be further configured to obtain the evaluation signal for the wireless fronthaul link in response to the information related to the provision of the evaluation signal. The control module may be further configured to determine the information related to the quality of the one or more wireless fronthaul links further based on the evaluation signal. Using a dedicated evaluation signal, which may comprise special coding, may enable further assessment of the quality for the wireless fronthaul link, e.g. related to quality deprecations based on cross-interference.

Embodiments further provide an apparatus suitable for a radio unit, suitable for providing information related to a quality of a wireless fronthaul link between a base band unit and the radio unit of a base station transceiver. The apparatus comprises at least one input to obtain information related to wireless access link quality indicators and at least one output to provide the information related to the quality of the wireless fronthaul link to the base band unit. The apparatus further comprises a control module to determine the information related to the quality of the wireless fronthaul link, based on the information related to the wireless access link quality indicators. The apparatus might collect the information related to the one or more wireless access link quality indicators to provide a comprehensive set of information related to quality indicators, which might be used to evaluate the quality of the wireless fronthaul link of the radio unit collecting the information.

Embodiments further provide an apparatus suitable for a mobile transceiver, suitable for providing an evaluation signal for at least one wireless fronthaul link between a base band unit and one or more radio units comprised in a base station transceiver. The mobile transceiver communicates with the base station transceiver using a wireless access link. The apparatus comprises a transceiver module to communicate with the base station transceiver via the wireless access link. The apparatus further comprises a control module to provide the evaluation signal for the wireless fronthaul link, and transmit the evaluation signal for the wireless fronthaul link using the transceiver module. Using a dedicated evaluation signal, which may comprise special coding, may enable further assessment of the quality for the wireless fronthaul link, e.g. related to quality deprecations based on cross-interference.

Embodiments further provide a method suitable for a base band unit for at least one wireless access link between a base station transceiver and at least one mobile transceiver. The method is suitable for providing information related to a quality of one or more wireless fronthaul links between the base band unit and one or more radio units comprised in the base station transceiver. The method comprises obtaining information related to one or more wireless access link quality indicators for at least one mobile transceiver and providing the information related to the quality of the one or more wireless fronthaul links. The method further comprises determining the information related to the quality of the one or more wireless fronthaul links, based on the information related to the one or more wireless access link quality indicators.

Embodiments further provide a method suitable for providing information related to a quality of a wireless fronthaul link between a base band unit and the radio unit of a base station transceiver. The method comprises obtaining information related to wireless access link quality indicators and providing the information related to the quality of the wireless fronthaul link to the base band unit. The method further comprises determining the information related to the quality of the wireless fronthaul link, based on the information related to the wireless access link quality indicators.

Embodiments further provide a method suitable for a mobile transceiver, suitable for providing an evaluation signal for at least one wireless fronthaul link between a base band unit and one or more radio units comprised in a base station transceiver. The mobile transceiver communicates with the base station transceiver using a wireless access link. The method comprises communicating with the base station transceiver via the wireless access link. The method further comprises providing the evaluation signal for the wireless fronthaul link, and transmitting the evaluation signal for the wireless fronthaul link.

Embodiments further provide a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
- Fig. 1: illustrates a block diagram of an embodiment of an apparatus suitable for a base band unit, suitable for providing information related to a quality of one or more wireless fronthaul links between the base band unit and one or more radio units of a base station transceiver;
- Fig. 2: illustrates a block diagram of an embodiment of at least two mobile transceivers maintaining at least two different wireless access links to at least two different radio units;
- Fig. 3: illustrates a block diagram of an embodiment;
- Fig. 4: illustrates a block diagram of an embodiment of an apparatus suitable for a radio unit, suitable for providing information related to a quality of a wireless fronthaul link between a base band unit and the radio unit of a base station transceiver;
- Fig. 5: illustrates a block diagram of an embodiment of an apparatus suitable for a mobile transceiver, suitable for providing an evaluation signal for at least one wireless fronthaul link between a base band unit and one or more radio units comprised in a base station transceiver.
- Fig. 6: shows a flow chart of an embodiment of a method suitable for providing information related to a quality of one or more wireless fronthaul links between the base band unit and one or more radio units of a base station transceiver;
- Fig. 7: shows a flow chart of an embodiment of a method suitable for providing information related to a quality of a wireless fronthaul link between a base band unit and the radio unit of a base station transceiver; and
- Fig. 8: shows a flow chart of an embodiment of a method suitable for a mobile transceiver, suitable for providing an evaluation signal for at least one wireless fronthaul link between a base band unit and one or more radio units comprised in a base station transceiver.

### Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

To enable an easy deployment of ubiquitous small cell nodes, a wireless fronthaul connection to these nodes might be used. The more advanced of these connections may be signal agnostic or even analog, meaning that they may shift the small cell access signal into the analog domain, on a different carrier frequency. Some connections may potentially use sharp beam forming or rely on coherent superposition (e.g. massive MIMO) to deliver the respective signal to the respective small cell.

In some cases, wherein the small cells might act as mere extensions (e.g. repeaters or frequency shifters) for the base band unit of the base station, the infrastructure connections might not be directly controlled (e.g. via feedback in the wireless fronthaul subsystem)

If the link quality on the infrastructure connection deteriorates, the quality of the access signal may also deteriorate. In at least some embodiments, the signal and information that the terminals in the access domain provide to the base station (the digital RF part and the radio base band of the base station) at the infrastructure end of the wireless fronthaul link might be leveraged in order to predict the state/quality of the infrastructure link, and trigger the reevaluation and adaption of the infrastructure link if necessary. A reduction of the inevitable downtime of the access part in the times of infrastructure link measurement and adaption may be valuable.

Embodiments might thus use terminal/access system information in order to assess the wireless fronthaul link quality and improve signal agnostic infrastructure wireless fronthaul systems as enablers for ubiquitous small cell deployments.

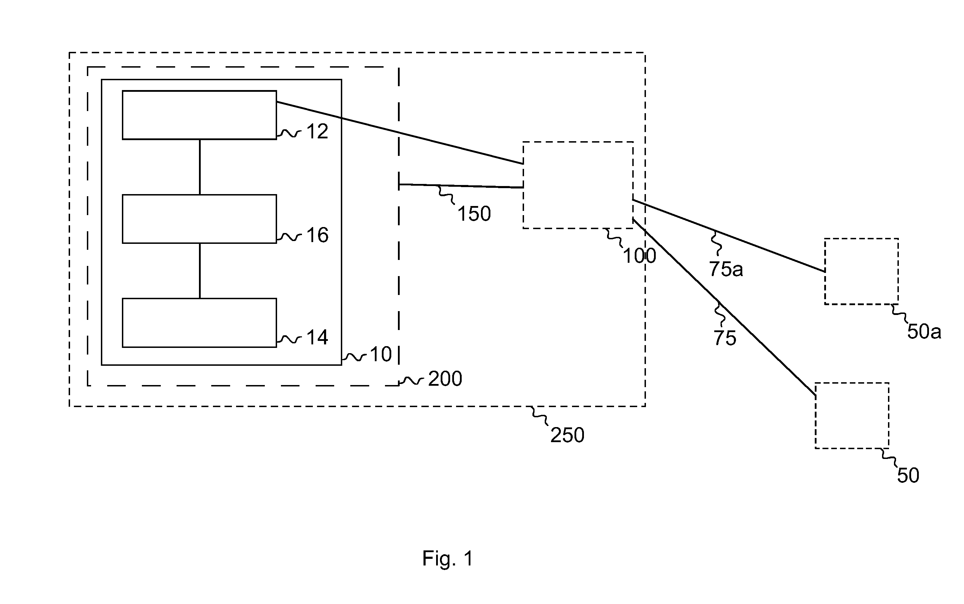

Fig. 1 illustrates a block diagram of an embodiment of an apparatus 10 suitable for a base band unit 200 for at least one wireless access link 75; 75a between a base station transceiver 250 and at least one mobile transceiver 50; 50a. The apparatus 10 is suitable for providing information related to a quality of one or more wireless fronthaul links 150 between the base band unit 200 and one or more radio units 100 comprised in the base station transceiver 250, the apparatus 10 comprising at least one input 12, at least one output 14 and a control module 16. The control module 16 is coupled to the at least one input 12 and the at least one output 14. The at least one input 12 is coupled to the one or more radio units 100. The one or more radio units 100 are further coupled to the base band unit 200 and to at least one mobile transceiver 50.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells and a kind of frequency shifters or repeaters. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology.

A base station transceiver can be located in the fixed or stationary part of the network or system. A base station transceiver may comprise a base band unit 200, which may correspond to a a macro cell, and one or more radio units 100, which may correspond to a remote radio head, a transmission point, an access point, radio equipment, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a eNodeB, a Base Transceiver Station (BTS) etc., which may be further subdivided in a radio unit and a base band unit. A radio unit may comprise a phase shifter or repeater for the signals provided and/or processed by the base band unit.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In general, the mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In at least some embodiments, the information related to the quality of the one or more wireless fronthaul links may comprise information related to a degradation of the quality of the one or more wireless fronthaul links 150 between the base band unit 200 and at least one of the one or more radio units 100. In at least some embodiments, a quality may correspond to an available bandwidth, a channel state, a number of dropped packets, a Signal to Noise Ratio (SNR), a Signal to Interference plus Noise Ratio (SINR), a Received Strength Signal Indication (RSSI) etc.

In at least some embodiments, the one or more wireless fronthaul links 150 may correspond to wireless data connections between the base band unit 200 and the one or more radio units 100. The wireless fronthaul links 150 might be signal agnostic or analog, meaning that they may comprise the small cell access signal shifted into the analog domain, on a different carrier frequency, e.g. by the one or more radio units 100. Some connections may potentially use sharp beam forming or rely on coherent superposition (e.g. massive MIMO) to deliver the respective signal to the respective small cell.

The apparatus 10 comprises at least one input 12 to obtain information related to one or more wireless access link quality indicators for the at least one wireless access link 75; 75a of the at least one mobile transceiver 50. An input may correspond to an interface for receiving information, which may be in digital (bit) values according to a specified code, within a module, between modules or between modules of different entities.

In at least some embodiments, the information related to the one or more wireless access link quality indicators may comprise information related to at least one element of the group of a Channel Quality Indicator (CQI),a Pre-coding Matrix Indicator (PMI), a Channel State Information (CSI), a Channel State Information at the Transmitter (CSIT), a correlated increase in interference for two or more of the at least one mobile transceiver 50, a correlated decrease of receiver power for two or more of the at least one mobile transceiver 50, a Received Signal Strength Indication (RSSI), a Received Signal Power Indication (RSPI), or a mismatch between an expected reception power and an actual reception power on a link.

In at least some embodiments, the wireless access link 75; 75a may comprise an uplink signal, from the at least one mobile transceiver 50; 50a to the base station transceiver 250 and a downlink signal, from the base station transceiver 250 to the at least one mobile transceiver 50; 50a. In various embodiments, the one or more radio units 100, the base band unit 200, and or the control module 16 may be configured to determine the information related to the one or more wireless access link quality indicators and/or information related to quality indicators of the uplink signal, based on the uplink signal and/or information related to the uplink signal.

In at least some embodiments, a degradation of the quality of an uplink component of the at least one wireless fronthaul link 150 may be determined, if the information related to the one or more wireless access link quality indicators indicate a good connection, and the information related to the quality indicators of the uplink signal indicate a degraded connection. In at least some embodiments, a degradation of the quality of the uplink component of the at least one wireless fronthaul link 150 may be determined, if no uplink signal is received.

In at least some embodiments, a degradation of a downlink component of the at least one wireless fronthaul link 150 may be determined if the information related to the one or more wireless access link quality indicators from a plurality of mobile transceivers 50; 50a indicate a degraded connection for a majority of the plurality of mobile transceivers 50; 50a and the information related to the quality indicators of the uplink signal indicate a good connection.

The apparatus 10 further comprises at least one output 14 to provide the information related to the quality of the one or more wireless fronthaul links. An output may correspond to an interface for transmitting information, which may be represented by digital (bit) values according to a specified code or protocol, within a module, between modules, or between modules of different entities.

The apparatus 10 further comprises a control module 16 to determine the information related to the quality of the one or more wireless fronthaul links, based on the information related to the one or more wireless access link quality indicators.

In embodiments the control module 16 may be implemented using one or more processing units, one or more processing devices, any means for processing, such as a processor, a computer or a programmable hardware component being operable with accordingly adapted software. In other words, the described functions of the control module 16 may as well be implemented in software, which is then executed on one or more programmable hardware components. Such hardware components may comprise a general purpose processor, a Digital Signal Processor (DSP), a micro-controller, etc.

In various embodiments, the control module 16 may be further configured to adjust transmission properties for the one or more wireless fronthaul links 150. The transmission properties may correspond to at least one element of the group of channel estimation, beamforming properties, directivity, precoding, pre-equalization, filter coefficients, or phase. In at least some embodiments, the control module 16 may be further configured to adjust the transmission properties for the one or more wireless fronthaul links 150 by recalibrating the channel, e.g. by transmitting pilot signals and estimating the channel. In at least some embodiments, the control module 16 may be further configured to delay a recalibration of readjustment of the transmission properties for the one or more wireless fronthaul links 150, based on the information related to the quality of the one or more wireless fronthaul links.

In at least some embodiments, the control module 16 may be configured to obtain the information related to the one or more wireless access link quality indicators from the at least one mobile transceiver 50, via the one or more radio units 100 and the at least one input 12. In embodiments, a wireless fronthaul uplink signal from one of the one or more radio units to the base band unit 200, transmitted on the wireless fronthaul link, may comprise radio link information/feedback from the at least one mobile transceiver 50, such as e.g. CQI, CSIT, or PMI, which may correspond to wireless access link quality indicators, and which may be obtained or by the at least one input 12.

In various embodiments, the control module 16 may be configured to obtain the information related to the one or more wireless access link quality indicators from the one or more radio units 100, via the at least one input 12. The one or more radio units 100 might collect and/or compile the information related to the one or more wireless access link quality indicators to provide a set of information related to the quality of the wireless fronthaul link of the radio unit collecting the information.

In at least some embodiments, the information related to the quality of the one or more wireless fronthaul links may be based on information related to the one or more wireless access link quality indicators from at least two mobile transceivers 50; 50a.

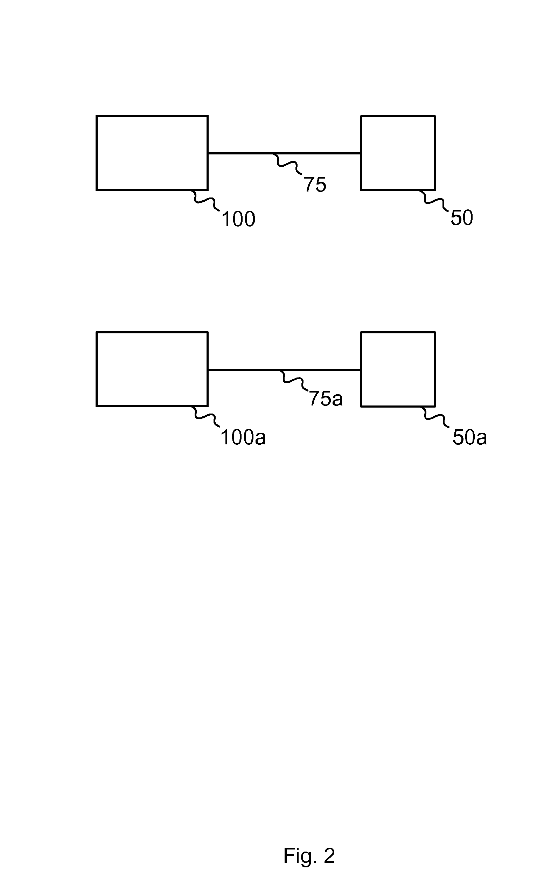

In at least some embodiments, the information related to one of the one or more wireless fronthaul links between the base band unit 200 and one of one or more the radio units 100 may be based on information related to at least two wireless access link quality indicators provided by at least two mobile transceivers 50; 50a associated to the one radio unit. In various embodiments, the at least two mobile transceivers 50; 50a may maintain at least two different wireless access links 75; 75a to at least two different radio units 100; 100a, as shown in Fig. 2.

In at least some embodiments, the control module 16 may be configured to determine the information related to the quality of the one of the one or more wireless fronthaul links based on a correlation of the information related to the one or more wireless access link quality indicators provided by at least two mobile transceivers 50; 50a associated with one of the one or more radio units 100, a correlation of a change in the information related to the one or more wireless access link quality indicators provided by the at least two mobile transceivers 50, 50a associated with the one of the one or more radio units 100, or a correlation of information related to compositions of multiple of the one or more wireless access link quality indicators provided by the at least two mobile transceivers 50; 50a associated with the one of the one or more radio units 100.

In at least some embodiments, the input 12 may be further configured to obtain information related to a movement of at least one mobile transceiver 50. The control module 16 may be further configured to base the information related to the quality of the one or more wireless fronthaul links also on the information related to the movement of the at least one mobile transceiver 50. In embodiments, the information related to a movement of at least one mobile transceiver may be used to weigh wireless access link quality indicators related to the at least one mobile transceiver 50 in a weighted combination, or may be used to exclude wireless access link quality indicators.

In various embodiments, the control module 16 may be further configured to provide information related to a provision of an evaluation signal, via the at least one output 14, to the at least one mobile transceiver 50. The at least one input 12 may be further configured to obtain the evaluation signal for the wireless fronthaul link in response to the information related to the provision of the evaluation signal. The control module 16 may be further configured to determine the information related to the quality of the one or more wireless fronthaul links further based on the evaluation signal. In embodiments, the information related to the provision of the evaluation signal may comprise at least one element of the group of information related to a timing, information related to a transmission trigger, information related to transmission gaps, information related to signal characteristics, and/or information related to a selection of mobile transceivers of the at least one mobile transceiver 50. The evaluation signal may comprise at least one element of the group of an analog signal, digital data sequences, coded data sequences, and evaluation sequences.

In order to estimate the cross-interference between links of the at least one fronthaul link (150), mobile transceivers served by different small cells may use transmission gaps for transmission of the evaluation signal, which may comprise data sequences, or the evaluation signal may be superimposed over the uplink data transmissions of the mobile transceivers. For the different fronthaul links the sequences may be recovered in the Massive Multiple Input Multiple Output (MMIMO) base band by the control module 16 (e. g. orthogonal sequences and correlation). From the leakage of a sequence associated with a mobile transceiver a first radio, that is recovered in the signal of other fronthaul connection (e. g. that of a second radio unit) a cross-interference may be estimated.

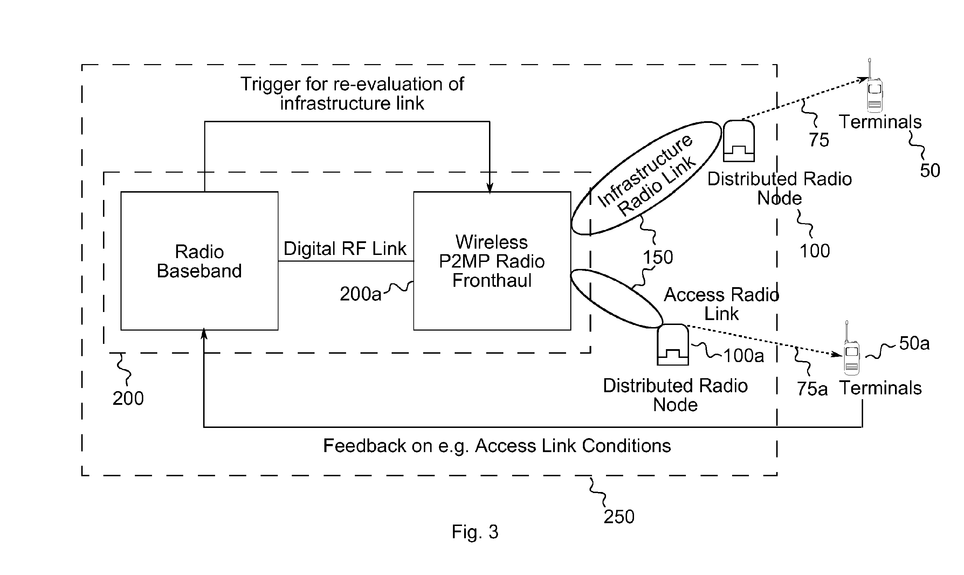

Fig. 3 shows a block diagram of an embodiment with a base band unit that provides its digital Radio Frequency (RF) signal to a wireless Point To MultiPoint (P2MP) Radio Infrastructure/Wireless fronthaul system. This system may, in embodiments, be forming beams via precoding to the radio units 100; 100a, which may also be denoted distributed radio nodes, which may serve the terminals on the wireless access link 75; 75a, and which might work as frequency shifters for the signal received on the infrastructure radio link 150, which may correspond to the wireless fronthaul link 150.

The wireless P2MP system might, in embodiments, act as an extension of the radio base stations RF part (the interface between the digital baseband and the transceiver of the access nodes), processing the RF signal in the path between digital RF and the transmission on the wireless access link 75; 75a, providing the wireless fronthaul link 150 between the base band unit 200 and the radio units 100; 100a.

In the regular operation of the system - the transmission from the terminals, or mobile transceivers 50; 50a - the analog uplink signal, from the radio unit to the wireless P2MP radio, may carry the radio link information/feedback (e. g. CQI, CSIT, PMI etc.) digitally. Such information might, in embodiments, be used to evaluate the wireless access link, as the wireless fronthaul link might often be assumed to be "perfect". The respective signal may be processed in the radio baseband.

In embodiments, information that might be extracted from this transmission may comprise:
▪ Information related to an uplink-link availability and quality: the radio base station, its RF part after the wireless P2MP infrastructure link as well as the digital RF or the digital baseband might evaluate the uplink signal quality, and may deliver this information to a control node
▪ If the uplink signal of the wireless access link can still be received correctly, the state of the digital feedback might indicate problems on the wireless fronthaul link, between the wireless P2MP radio 200a and the radio units 100; 100a (e.g. bad CQI/CSIT values, low RSSI or bad RSPI, high interference).

This information may now comprise impairments from the wireless fronthaul and the wireless access link. Overall statistics over several terminals of one distributed radio node and over all distributed radio nodes and/or statistics over different parameters might be used to improve the analysis and decision making for optimization, e.g. for determining the influence of the quality of the wireless fronthaul link. For example, only certain links might be disturbed, so only a subset of links might be measured. In embodiments, it might suffice to measure the critical links, although the overall precoding still may be recalculated with this updated information to improve the link.

If, in embodiments, the uplink of the wireless fronthaul link between the radio unit 100 and the wireless P2MP radio 200a is down, the link in the opposite direction might not be assessed. In this case, a system calibration might be done, by an enforced downtime, in order to recover the link.

If the uplink of the wireless fronthaul link between the radio unit 100 and the wireless P2MP radio 200a is of reduced quality, information on the quality of the link in the opposite direction might be received. Decisions on executing an enforced system downtime and calibration might, in embodiments, be done by comparing and assessing the required link performance and actually available link quality.

During initialization, the wireless P2MP wireless fronthaul may be established and adjusted to improve the transmissions between the base unit 200 and the radio units 100; 100a by a measurement phase. The established links may serve as baseline for further procedures.

With these links in place, in embodiments, the discovery of the radio network environment, e. g. if there are any serviceable mobile transceivers for the distributed radio nodes via the wireless access links may be performed. At this time the signal on the wireless access links - defined by the quality of the wireless fronthaul link signal - might also be adjusted and improved. Terminals may be acquired on the wireless access link for servicing via the base station/radio base band.

The downlink wireless access link to the individual mobile transceivers 50; 50a may be defined by several channel properties that themselves are dependent on e. g. position of the mobile transceivers 50; 50a, movement and changes of the environment, among others.

Several properties might, in embodiments, be used in order to discriminate changes solely on the wireless access link from degradation of the infrastructure wireless fronthaul link:
▪ A correlated increase in interference between served terminals as indicated by a degradation of measures like CQI. These changes might be differentiated from e. g. fast fading, which may changes rapidly over the Transmission Time Interval (TTI) and might affect few and discrete resources (e. g. Physical Resource Blocks in LTE).
▪ Correlated reduction of overall receive power of the terminals

The correlation *Kor*(*u*1, ..., *u*1) might be calculated from the metrics that the terminals might deliver to the base station, as the measures are readily available. In various embodiments, *u*1 might be the measures itself (e. g. CQI) or a metric of the change of these measures between calculations, or even a composed utility of several indicators, as a correlation of the metrics' change between the terminals that indicates a wireless fronthaul link degradation may be of interest. In principle, any mathematical operation that might estimate a common trend in measurements might be used for assessment.

The measurement might be improved by further knowledge that the base station has on the terminals, e. g. terminal speed or link measurements to other base stations that may indicate a movement or good link in that direction. Terminals with high movement speeds or otherwise highly varying channel conditions might, in embodiments, be excluded or give lesser weight in the measurement.

On the wireless fronthaul uplink, the P2MP system might leverage the same properties from the radio base band. Additionally, the P2MP system might measure the receive strength from its serviced distributed radio nodes. From the Radio base band, in embodiments, the P2MP system might gain information about the serviced mobile transceivers 50; 50a and may estimate the receive power that it should achieve (e. g. by uplink acknowledges or uplink data transmission that is scheduled for the terminals), and may decide whether the receive power matches these expected transmissions in time and quality/signal strength. After the receiver in the P2MP system (e.g. maximum ration combining), the signal might be assessed before it is transferred to the radio base band for further receive and forward error correction procedures.

In case a lightweight control channel may be achieved on the infrastructure radio link, in embodiments, the distributed radio node might signal an unexpected decrease in receive strength from the P2MP system (mismatch between the expected power in the wireless access link signal vs. receive strength on the wireless fronthaul link) and may indicate this in the uplink control channel.

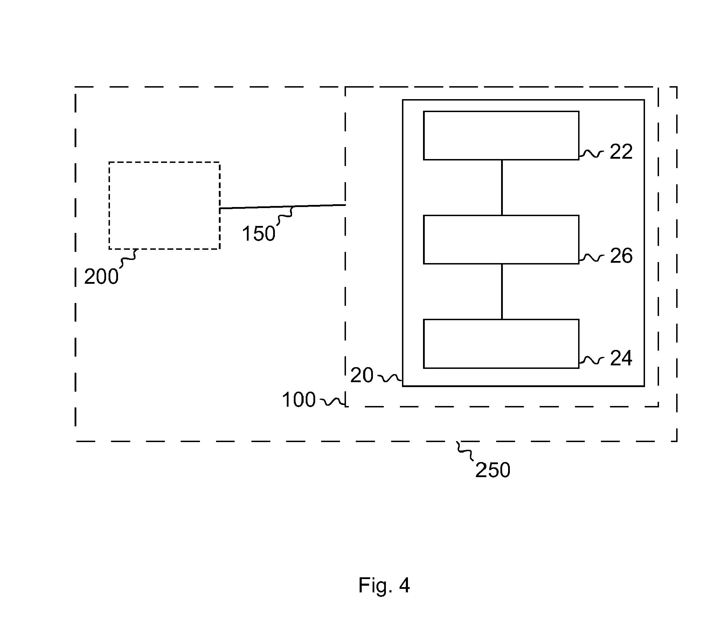

Fig. 4 Illustrates a block diagram of an embodiment of an apparatus 20 suitable for a radio unit 100, suitable for providing information related to a quality of a wireless fronthaul link 150 between a base band unit 200 and the radio unit 100 of a base station transceiver 250, the apparatus 20 comprising at least one input 22, at least one output 24, and a control module 26. The control module 26 is coupled to the at least one input 22 and the at least one output 24. The radio unit 100 is coupled to the base band unit 200, via the wireless fronthaul link 150.

The apparatus 20 comprises the at least one input 22 to obtain information related to wireless access link quality indicators and the at least one output 24 to provide the information related to the quality of the wireless fronthaul link to the base band unit 200. An input may correspond to an interface for receiving information, which may be in digital (bit) values according to a specified code, within a module, between modules or between modules of different entities. An output may correspond to an interface for transmitting information, which may be represented by digital (bit) values according to a specified code or protocol, within a module, between modules, or between modules of different entities.

The apparatus 20 further comprises the control module 26 to determine the information related to the quality of the wireless fronthaul link, based on the information related to the wireless access link quality indicators.

In embodiments the control module 26 may be implemented using one or more processing units, one or more processing devices, any means for processing, such as a processor, a computer or a programmable hardware component being operable with accordingly adapted software. In other words, the described functions of the control module 26 may as well be implemented in software, which is then executed on one or more programmable hardware components. Such hardware components may comprise a general purpose processor, a Digital Signal Processor (DSP), a micro-controller, etc.

More details and aspects of the apparatus 20 (e.g. information related to the quality of the wireless fronthaul link, information related to the wireless access link quality indicators) are mentioned in connection with the proposed concept or one or more examples described above (e.g. Fig. 1 to 3). The apparatus 20 may comprise one or more additional optional features corresponding to one or more aspects of the proposed concept or one or more examples described above or below.

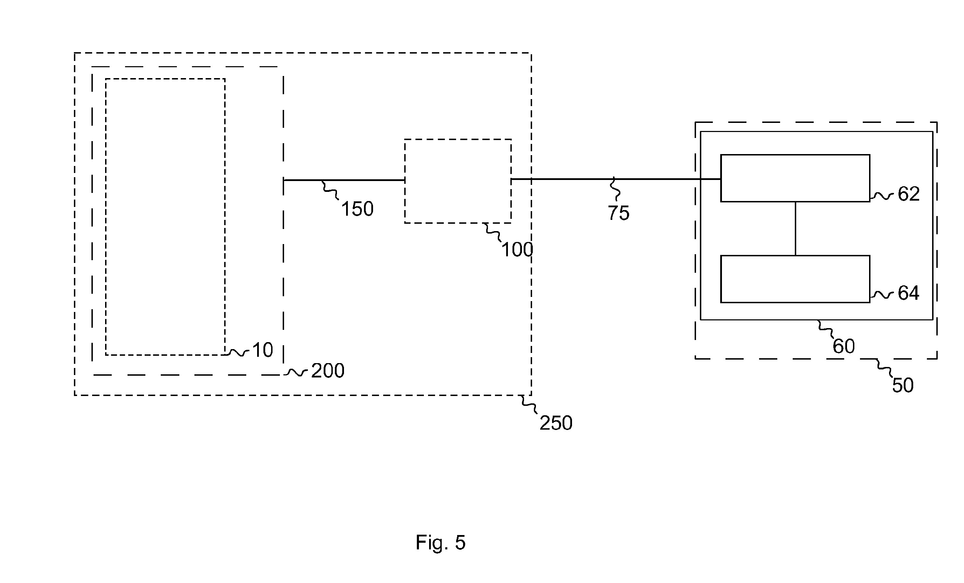

Fig. 5 illustrates a block chart of an embodiment of an apparatus 60 suitable for a mobile transceiver 50, suitable for providing an evaluation signal for at least one wireless fronthaul link 150 between a base band unit 200 and one or more radio units 100 comprised in a base station transceiver 250. The mobile transceiver 50 communicates with the base station transceiver 250 using a wireless access link 75. The apparatus 60 comprises a transceiver module 62 to communicate with the base station transceiver 250 via the wireless access link 75. The apparatus 60 further comprises a control module 64 to provide the evaluation signal for the wireless fronthaul link, and transmit the evaluation signal for the wireless fronthaul link using the transceiver module 62. The control module 64 is coupled to the transceiver module 62. The transceiver module 62 is further coupled to the base station transceiver 250, via the wireless access link 75.

The transceiver module 62 may be implemented as any means for transceiving, i.e. receiving and/or transmitting etc., one or more transceiver units, one or more transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

The evaluation signal may comprise at least one element of the group of an analog signal, digital data sequences, coded data sequences, and evaluation sequences.

In at least some embodiments, the control module 64 may be further configured to provide and/or transmit the evaluation signal based on information related to a provision of the evaluation signal. In embodiments, the information related to the provision of the evaluation signal may comprise at least one element of the group of information related to a timing, information related to a transmission trigger, information related to transmission gaps, information related to signal characteristics, and information related to a selection of mobile transceivers of the at least one mobile transceiver 50.

In embodiments the control module 64, may be implemented using one or more processing units, one or more processing devices, any means for processing, such as a processor, a computer or a programmable hardware component being operable with accordingly adapted software. In other words, the described functions of the control module 64 may as well be implemented in software, which is then executed on one or more programmable hardware components. Such hardware components may comprise a general purpose processor, a Digital Signal Processor (DSP), a micro-controller, etc.

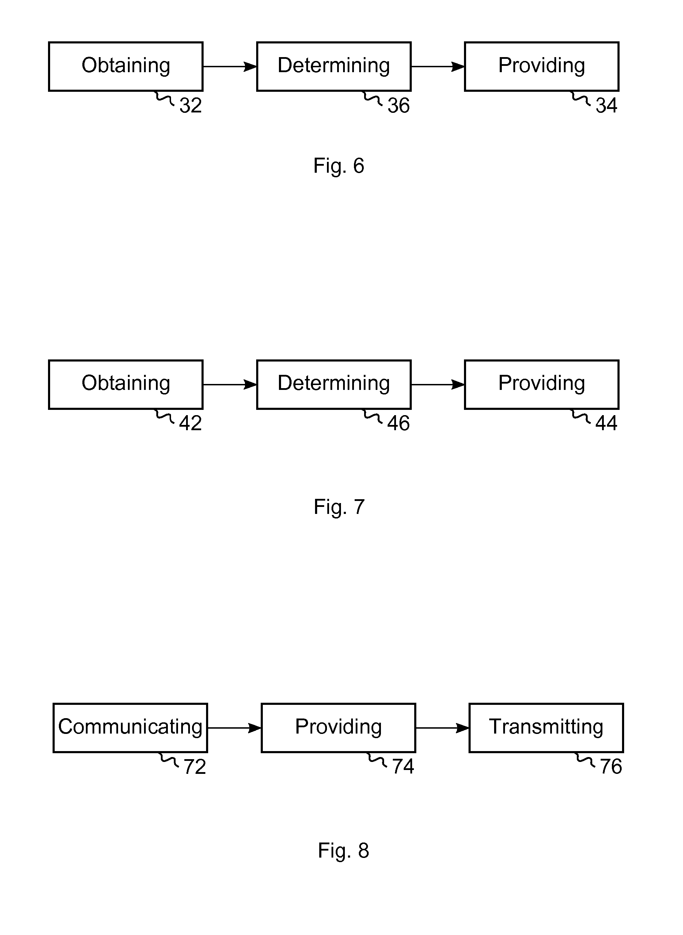

Fig. 6 shows a flow chart of an embodiment of a method suitable for a base band unit 200 for at least one wireless access link 75 between a base station transceiver 250 and at least one mobile transceiver 50; 50a. The method is suitable for providing information related to a quality of one or more wireless fronthaul links between the base band unit 200 and one or more radio units 100 comprised in the base station transceiver 250. The method comprises obtaining 32 information related to one or more wireless access link quality indicators for the at least one wireless access link 75 of the at least one mobile transceiver 50 and providing 34 the information related to the quality of the one or more wireless fronthaul links. The method further comprises determining 36 the information related to the quality of the one or more wireless fronthaul links, based on the information related to the one or more wireless access link quality indicators.

Fig. 7 shows a flow chart of an embodiment of a method suitable for providing information related to a quality of a wireless fronthaul link between a base band unit 200 and a radio unit 100 of a base station transceiver 250. The method comprises obtaining 42 information related to wireless access link quality indicators and providing 44 the information related to the quality of the wireless fronthaul link to the base band unit 200. The method further comprises determining 46 the information related to the quality of the wireless fronthaul link, based on the information related to the wireless access link quality indicators.

Fig. 8 shows a flow chart of an embodiment of a method suitable for a mobile transceiver 50, suitable for providing an evaluation signal for at least one wireless fronthaul link 150 between a base band unit 200 and one or more radio units 100 comprised in a base station transceiver 250. The mobile transceiver 50 communicates with the base station transceiver 250 using a wireless access link 75. The method comprises communicating 72 with the base station transceiver 250 via the wireless access link 75. The method further comprises providing 74 the evaluation signal for the wireless fronthaul link, and transmitting 76 the evaluation signal for the wireless fronthaul link.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. Apparatus (10) suitable for a base band unit (200) for at least one wireless access link (75; 75a) between a base station transceiver (250) and at least one mobile transceiver (50; 50a), the apparatus (10) being suitable for providing information related to a quality of one or more wireless fronthaul links (150) between the base band unit (200) and one or more radio units (100) comprised in the base station transceiver (250), the apparatus (10) comprising
at least one input (12) to obtain information related to one or more wireless access link quality indicators for the at least one wireless access link (75; 75a) of the at least one mobile transceiver (50);
at least one output (14) to provide the information related to the quality of the one or more wireless fronthaul links; and
a control module (16) to determine the information related to the quality of the one or more wireless fronthaul links, based on the information related to the one or more wireless access link quality indicators.

2. The apparatus (10) of claim 2, wherein the control module (16) is further configured to adjust transmission properties for the one or more wireless fronthaul links (150).

3. The apparatus (10) of claim 1, wherein the information related to the one or more wireless access link quality indicators comprises information related to at least one element of the group of a Channel Quality Indicator, CQI, a Pre-coding Matrix Indicator, PMI, a Channel State Information, CSI, a Channel State Information at the Transmitter, CSIT, a correlated increase in interference for two or more of the at least one mobile transceiver (50), a correlated decrease of receiver power for two or more of the at least one mobile transceiver (50), a Received Signal Strength Indication, RSSI, a Received Signal Power Indication, RSPI, or a mismatch between an expected reception power and an actual reception power on a link, and/or wherein the information related to the quality of the one or more wireless fronthaul links comprises information related to a degradation of the quality of the one or more wireless fronthaul links (150) between the base band unit (200) and at least one of the one or more radio units (100).

4. The apparatus (10) of claim 1, wherein the control module (16) is configured to obtain the information related to the one or more wireless access link quality indicators from the one or more radio units (100), via the at least one input (12) and/or wherein the control module (16) is configured to obtain the information related to the one or more wireless access link quality indicators from the at least one mobile transceiver (50), via the one or more radio units (100) and the at least one input (12).

5. The apparatus (10) of claim 4, wherein the information related to the quality of the one or more wireless fronthaul links is based on information related to the one or more wireless access link quality indicators from at least two mobile transceivers (50; 50a) and/or wherein the information related to the quality of the one or more wireless fronthaul links is based on information related to the one or more wireless access link quality indicators from at least two mobile transceivers (50; 50a) the at least two mobile transceivers (50; 50a) maintain at least two different wireless access links to at least two different radio units (100; 100a).

6. The apparatus (10) of claim 4, wherein the information related to one of the one or more wireless fronthaul links between the base band unit (200) and one of one or more the radio units (100) is based on information related to at least two wireless access link quality indicators provided by at least two mobile transceivers (50; 50a) associated to the one radio unit.

7. The apparatus (10) of claim 6, wherein the control module (16) is configured to determine the information related to the quality of the one of the one or more wireless fronthaul links based on a correlation of the information related to the one or more wireless access link quality indicators provided by at least two mobile transceivers (50; 50a) associated with one of the one or more radio units (100), a correlation of a change in the information related to the one or more wireless access link quality indicators provided by the at least two mobile transceivers (50, 50a) associated with the one of the one or more radio units (100), or a correlation of information related to compositions of multiple of the one or more wireless access link quality indicators provided by the at least two mobile transceivers (50; 50a) associated with the one of the one or more radio units (100).

8. The apparatus (10) of claim 1, wherein the input (12) is further configured to obtain information related to a movement of at least one mobile transceiver (50), and wherein the control module (16) is further configured to base the information related to the quality of the one or more wireless fronthaul links also on the information related to the movement of the at least one mobile transceiver (50).

9. The apparatus (10) of claim 1, wherein the control module (16) is further configured to provide information related to a provision of an evaluation signal, via the at least one output (14), to the at least one mobile transceiver (50), and wherein the at least one input (12) is further configured to obtain the evaluation signal for the wireless fronthaul link in response to the information related to the provision of the evaluation signal, and wherein the control module (16) is further configured to determine the information related to the quality of the one or more wireless fronthaul links further based on the evaluation signal.

10. An apparatus (20) suitable for a radio unit (100), suitable for providing information related to a quality of a wireless fronthaul link between a base band unit (200) and the radio unit (100) of a base station transceiver (250), the apparatus (20) comprising
at least one input (22) to obtain information related to wireless access link quality indicators;
at least one output (24) to provide the information related to the quality of the wireless fronthaul link to the base band unit (200); and
a control module (26) to determine the information related to the quality of the wireless fronthaul link, based on the information related to the wireless access link quality indicators.

11. An apparatus (60) suitable for a mobile transceiver (50), suitable for providing an evaluation signal for at least one wireless fronthaul link (150) between a base band unit (200) and one or more radio units (100) comprised in a base station transceiver (250), the mobile transceiver (50) communicating with the base station transceiver (250) using a wireless access link (75), the apparatus (60) comprising
a transceiver module (62) to communicate with the base station transceiver (250) via the wireless access link (75); and
a control module (64) to
provide the evaluation signal for the wireless fronthaul link, and transmit the evaluation signal for the wireless fronthaul link using the transceiver module (62).

12. Method suitable for a base band unit (200) for at least one wireless access link (75; 75a) between a base station transceiver (250) and at least one mobile transceiver (50; 50a), the method being suitable for providing information related to a quality of one or more wireless fronthaul links (150) between the base band unit (200) and one or more radio units (100) comprised in the base station transceiver (250), the method comprising
Obtaining (32) information related to one or more wireless access link quality indicators for the at least one wireless access link (75; 75a) of the at least one mobile transceiver (50);
providing (34) the information related to the quality of the one or more wireless fronthaul links; and
Determining (36) the information related to the quality of the one or more wireless fronthaul links, based on the information related to the one or more wireless access link quality indicators.

13. Method suitable for providing information related to a quality of a wireless fronthaul link between a base band unit (200) and the radio unit (100) of a base station transceiver (250), the method comprising
obtaining (42) information related to wireless access link quality indicators; providing (44) the information related to the quality of the wireless fronthaul link to the base band unit (200); and
determining (46) the information related to the quality of the wireless fronthaul link, based on the information related to the wireless access link quality indicators.

14. A method suitable for a mobile transceiver (50), suitable for providing an evaluation signal for at least one wireless fronthaul link (150) between a base band unit (200) and one or more radio units (100) comprised in a base station transceiver (250), the mobile transceiver (50) communicating with the base station transceiver (250) using a wireless access link (75), the method comprising
communicating (72) with the base station transceiver (250) via the wireless access link (75); and
providing (74) the evaluation signal for the wireless fronthaul link, and
transmitting (76) the evaluation signal for the wireless fronthaul link.

15. A computer program having a program code for performing at least one of the methods of claims 12, 13 and 14, when the computer program is executed on a computer, a processor, or a programmable hardware component.

## Amended claims

### Amended claims in accordance with Rule 137(2) EPC.

1. Apparatus (10) suitable for a base band unit (200) for at least one wireless access link (75; 75a) between a base station transceiver (250) and at least one mobile transceiver (50; 50a), the apparatus (10) being suitable for providing information related to a quality of one or more wireless fronthaul links (150) between the base band unit (200) and one or more radio units (100) comprised in the base station transceiver (250), the apparatus (10) comprising
at least one input (12) to obtain information related to one or more wireless access link quality indicators for the at least one wireless access link (75; 75a) of the at least one mobile transceiver (50);
at least one output (14) to provide the information related to the quality of the one or more wireless fronthaul links; and
a control module (16) to determine the information related to the quality of the one or more wireless fronthaul links, based on the information related to the one or more wireless access link quality indicators.

2. The apparatus (10) of claim 2, wherein the control module (16) is further configured to adjust transmission properties for the one or more wireless fronthaul links (150).

3. The apparatus (10) of claim 1, wherein the information related to the one or more wireless access link quality indicators comprises information related to at least one element of the group of a Channel Quality Indicator, CQI, a Pre-coding Matrix Indicator, PMI, a Channel State Information, CSI, a Channel State Information at the Transmitter, CSIT, a correlated increase in interference for two or more of the at least one mobile transceiver (50), a correlated decrease of receiver power for two or more of the at least one mobile transceiver (50), a Received Signal Strength Indication, RSSI, a Received Signal Power Indication, RSPI, or a mismatch between an expected reception power and an actual reception power on a link, and/or wherein the information related to the quality of the one or more wireless fronthaul links comprises information related to a degradation of the quality of the one or more wireless fronthaul links (150) between the base band unit (200) and at least one of the one or more radio units (100).

4. The apparatus (10) of claim 1, wherein the control module (16) is configured to obtain the information related to the one or more wireless access link quality indicators from the one or more radio units (100), via the at least one input (12) and/or wherein the control module (16) is configured to obtain the information related to the one or more wireless access link quality indicators from the at least one mobile transceiver (50), via the one or more radio units (100) and the at least one input (12).

5. The apparatus (10) of claim 4, wherein the information related to the quality of the one or more wireless fronthaul links is based on information related to the one or more wireless access link quality indicators from at least two mobile transceivers (50; 50a) and/or wherein the information related to the quality of the one or more wireless fronthaul links is based on information related to the one or more wireless access link quality indicators from at least two mobile transceivers (50; 50a) the at least two mobile transceivers (50; 50a) maintain at least two different wireless access links to at least two different radio units (100; 100a).

6. The apparatus (10) of claim 4, wherein the information related to one of the one or more wireless fronthaul links between the base band unit (200) and one of one or more the radio units (100) is based on information related to at least two wireless access link quality indicators provided by at least two mobile transceivers (50; 50a) associated to the one radio unit.

7. The apparatus (10) of claim 6, wherein the control module (16) is configured to determine the information related to the quality of the one of the one or more wireless fronthaul links based on a correlation of the information related to the one or more wireless access link quality indicators provided by at least two mobile transceivers (50; 50a) associated with one of the one or more radio units (100), a correlation of a change in the information related to the one or more wireless access link quality indicators provided by the at least two mobile transceivers (50, 50a) associated with the one of the one or more radio units (100), or a correlation of information related to compositions of multiple of the one or more wireless access link quality indicators provided by the at least two mobile transceivers (50; 50a) associated with the one of the one or more radio units (100).

8. The apparatus (10) of claim 1, wherein the input (12) is further configured to obtain information related to a movement of at least one mobile transceiver (50), and wherein the control module (16) is further configured to base the information related to the quality of the one or more wireless fronthaul links also on the information related to the movement of the at least one mobile transceiver (50).

9. The apparatus (10) of claim 1, wherein the control module (16) is further configured to provide information related to a provision of an evaluation signal for the wireless fronthaul link, via the at least one output (14), to the at least one mobile transceiver (50), and wherein the at least one input (12) is further configured to obtain the evaluation signal in response to the information related to the provision of the evaluation signal, wherein the evaluation signal comprises at least one element of the group of an analog signal, digital data sequences, coded data sequences, and evaluation sequences, and wherein the control module (16) is further configured to determine the information related to the quality of the one or more wireless fronthaul links further based on the evaluation signal.

10. An apparatus (20) suitable for a radio unit (100), suitable for providing information related to a quality of a wireless fronthaul link between a base band unit (200) and the radio unit (100) of a base station transceiver (250), the apparatus (20) comprising
at least one input (22) to obtain information related to wireless access link quality indicators;
at least one output (24) to provide the information related to the quality of the wireless fronthaul link to the base band unit (200); and
a control module (26) to determine the information related to the quality of the wireless fronthaul link, based on the information related to the wireless access link quality indicators.

11. An apparatus (60) suitable for a mobile transceiver (50), suitable for providing an evaluation signal for at least one wireless fronthaul link (150) between a base band unit (200) and one or more radio units (100) comprised in a base station transceiver (250), the mobile transceiver (50) communicating with the base station transceiver (250) using a wireless access link (75), the apparatus (60) comprising
a transceiver module (62) to communicate with the base station transceiver (250) via the wireless access link (75); and
a control module (64) to
provide the evaluation signal for the wireless fronthaul link, and transmit the evaluation signal for the wireless fronthaul link using the transceiver module (62),
wherein the evaluation signal comprises at least one element of the group of an analog signal, digital data sequences, coded data sequences, and evaluation sequences.

12. Method suitable for a base band unit (200) for at least one wireless access link (75; 75a) between a base station transceiver (250) and at least one mobile transceiver (50; 50a), the method being suitable for providing information related to a quality of one or more wireless fronthaul links (150) between the base band unit (200) and one or more radio units (100) comprised in the base station transceiver (250), the method comprising Obtaining (32) information related to one or more wireless access link quality indicators for the at least one wireless access link (75; 75a) of the at least one mobile transceiver (50);
Determining (36) the information related to the quality of the one or more wireless fronthaul links, based on the information related to the one or more wireless access link quality indicators; and
providing (34) the information related to the quality of the one or more wireless fronthaul links.

13. Method suitable for providing information related to a quality of a wireless fronthaul link between a base band unit (200) and the radio unit (100) of a base station transceiver (250), the method comprising
obtaining (42) information related to wireless access link quality indicators;
providing (44) the information related to the quality of the wireless fronthaul link to the base band unit (200); and
determining (46) the information related to the quality of the wireless fronthaul link, based on the information related to the wireless access link quality indicators.

14. A method suitable for a mobile transceiver (50), suitable for providing an evaluation signal for at least one wireless fronthaul link (150) between a base band unit (200) and one or more radio units (100) comprised in a base station transceiver (250), the mobile transceiver (50) communicating with the base station transceiver (250) using a wireless access link (75), the method comprising
communicating (72) with the base station transceiver (250) via the wireless access link (75); and
providing (74) the evaluation signal for the wireless fronthaul link, and
transmitting (76) the evaluation signal for the wireless fronthaul link,
wherein the evaluation signal comprises at least one element of the group of an analog signal, digital data sequences, coded data sequences, and evaluation sequences..

15. A computer program having a program code for performing at least one of the methods of claims 12, 13 and 14, when the computer program is executed on a computer, a processor, or a programmable hardware component.
